(19) Europäisches Patentamt
European Patent Office
Office européen des brevets

(11) **EP 4 406 990 A1**

(12) **EUROPEAN PATENT APPLICATION**

(43) Date of publication:
**31.07.2024 Bulletin 2024/31**

(21) Application number: **23170680.5**

(22) Date of filing: **28.04.2023**

(51) International Patent Classification (IPC):
**C08G 63/08** (2006.01)  **C08K 3/26** (2006.01)
**C08K 11/00** (2006.01)

(52) Cooperative Patent Classification (CPC):
(C-Sets available)
**C08K 3/26; C08K 11/00;** C08G 63/08  (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.01.2023 PT 2023118485**

(71) Applicant: **The Good Bottle Company, Lda.**
**7800-451 Beja (PT)**

(72) Inventors:
- **ESTEVES DE SOUSA FANGUEIRO, RAUL MANUEL**
 **4700-150 BRAGA (PT)**
- **MACEDO DA CUNHA, FERNANDO EDUARDO**
 **4715-592 BRAGA (PT)**
- **COSTA MOTA, CARLOS MIGUEL**
 **4720-535 BRAGA (PT)**
- **DE SOUSA BESSA SOARES, JOÃO LUÍS**
 **4720-535 MAIA (PT)**

(74) Representative: **Patentree**
**Edificio Net**
**Rua de Salazares, 842**
**4149-002 Porto (PT)**

(54) **BIODEGRADABLE POLYMERIC COMPOSITION, ITS PRODUCTION METHOD AND RESPECTIVE USES**

(57) The present disclosure relates to a biodegradable polymeric composition, its production method and respective uses.

It is disclosed a biodegradable polymeric composition comprising a polymer or copolymer selected from a list consisting of polyhydroxyalkanoate, polyhydroxybutyrate, polylactic acid, poly(L-lactide), and their combinations thereof; and an additive selected from a photosynthetic eukaryotic organism.

The composition now disclosed allow the production of articles with a higher biodegradability degree without compromise the mechanical resistance.

Processed by Luminess, 75001 PARIS (FR)

**(Cont. next page)**

EP 4 406 990 A1

(52) Cooperative Patent Classification (CPC): (Cont.)

C-Sets
**C08K 3/26, C08L 67/04;**
**C08K 11/00, C08L 67/04**

**Description**

**TECHNICAL FIELD**

The present disclosure relates to a biodegradable polymeric composition, its production method and respective uses.

**BACKGROUND**

The etymology of the word polymers dates back to Greek civilisation: "poly - many" and "mere-repeating unit". Specifically, polymers are made up of several repeating units of monomers, from the Greek *mono.* Polymers are large molecules, typically between 1000 and 1,000,000 monomers per chain, macromolecules made up of repeating simpler and smaller units, the monomers, which in turn are chemically linked to each other through polymerisation reactions, giving rise to covalent bonds. The introduction of polymers into society has replaced numerous materials given their associated advantages, such as ease of processing, high productivity and cost reduction [1]. Polymers are distinguished from other types of materials by the presence of long molecular chains, composed essentially of carbon and hydrogen. The arrangement between the various atoms gives rise to distinct structures: linear, branched or three-dimensional [2].

In the design of any polymeric product, it is essential to consider the information gathered since the inherent characteristics of the base materials will influence the production process and the properties of the final product. As such, when developing a product, such as packaging, the intended use of the product must be taken into consideration in order to apply and manipulate the materials to obtain the desired properties.

Regardless of the technical sector, polymers have been applied, for example in the manufacture of packaging, for a long time due to their very attractive characteristics: lightness, softness, transparency, low cost and high mechanical performance. polyethylene terephthalate (PET), polyvinyl chloride (PVC), polyethylene (PE), polypropylene (PP), polystyrene (PS) and polyamide (PA) are examples of polymers frequently applied in packaging and which meet the mentioned characteristics. However, the excessive use of these types of materials has led to serious environmental problems, since most of them are neither recyclable nor biodegradable, thus compromising the stability of the environment. Most of these materials are sent to landfills, increasing this accelerated problem every year [3]. It becomes vital the establishment of studies that enable the application of materials that on the one hand do not compromise the environment and on the other do not compromise the desirable properties in a packaging. Biodegradable polymers and biopolymers are examples of polymers with a positive connotation on the environment and with a high potential of application in the packaging sector. Biodegradable polymers are characterised by the ability to convert into water and carbon dioxide through the action of micro-organisms, while biopolymers are polymers produced by living beings or originating from natural resources. The generality of all these materials is given the generic categorisation of bioplastics [4].

Bioplastics aim to mimic the life cycle of biomass, including the conservation of fossil resources, water and carbon dioxide production. European Bioplastics has defined this cycle aiming at the main points: renewable carbon concept, obtaining raw material for new packaging aiming at consumption, the collection of waste and its reprocessing in order to recover the organic component.

The concept of recycling is not always of possible application in the packaging sector since sometimes plastics are contaminated by food in an irreversible way [3], making the idea of biodegradability even more attractive. Thus, the development of products that combine the factors relating to environmental impact and effectiveness has been the great trend of current times. The term biodegradable applies to all materials with the capacity to decompose into carbon dioxide ($CO_2$), water ($H_2O$), methane ($CH_4$) and organic compounds or biomass, with the enzymatic action of microorganisms being the predominant mechanism of decomposition. The action of enzymes will cause the breakdown of chemical bonds of the polymer's main chain. In turn, microorganisms (bacteria, fungi and algae) use the various components of the polymer as a nutritional source.

Thus, in defining the biodegradability capacity of a polymer, factors such as: the chemical structure, namely the polymeric structure and functional groups targeted for enzyme action; the organisation of the structures, whether crystalline or amorphous; the molecular mass, in which the longer the polymer the longer it will take for degradation to occur and the environmental conditions, such as humidity, nutrients, minerals, temperatures within the range 20-60°C and pH between 5-8 [5] should be considered.

With the study and development of new products, new theoretical concepts were also defined that allowed the technological development of the products: plastics are composed of polymers and other chemicals, such as stabilizers, additives, dyes, among others. Based on this new theoretical knowledge, optimization strategies started to be established, such as the manipulation of the type of polymers and their concentration [3].

In recent years, the entire packaging sector has gained a new connotation given the inclusion of extra factors such as impact on the environment, recyclability character and biodegradability categorization. All these changes have created the need for recurrent and intensive studies in order to establish solutions that do not compromise the quality and functionality of the product. In this sense, several products based on biopolymers, materials of natural origin, biodegradable and recyclable materials have been explored and developed [3]. Studies have also been developed in order to produce this new type of materials, however it is essential that they maintain the integrity of the food, not compromising its quality and consumer health.

These facts are described in order to illustrate the technical problem solved by the achievements of the present document.

## GENERAL DESCRIPTION

The present disclosure relates to a biodegradable polymeric composition, its production method and respective uses.

In the development of this new product the aim was to develop a polymeric composition, applicable for example in packaging, boxes, bags, bottles, capsules, their combinations or other embodiments suitable for the desired effect. Throughout this text, packaging is considered as a wrapping or container used to condition or package food. This biodegradable polymeric composition presents itself as a technical solution capable of responding to the two concepts pointed out: a positive environmental impact and functionality.

Packaging plays a significant role in protecting food from microbiological contamination [2].

The present description refers to a polymeric composition used, for example in packaging, that meets the most recent needs of society regarding the concept of packaging and also the production of a product with a sustainable basis without compromising its functionality. In the development of this product, an essential point was also considered: the establishment of standards throughout the entire packaging production process to ensure that the finished product meets all the established requirements for packaging. In order to coverall the essential topics in the development of this new type of material, specifically the product defined in the scope of this application, a survey was carried out at the level of current standards that define the quality, acceptance and implementation of packaging in the food sector. Key points that the packaging must meet were identified, such as the integrity of the food and the information for the consumer, carried out through labelling and traceability.

Forthis main objective of developing a polymeric composition to be used, among other uses, in the packaging, it is necessary to take into consideration one of the main requirements defined in the design of the product: biodegradability. As such, the product, such as a food packaging, container, a beverage holder or a bottle should be made of materials that have the potential to be degraded by living organisms when in contact with the environment and with its useful life span.

It was then developed a biodegradable polymeric composition that comprises a biodegradable polymer and at least one additive selected from a photosynthetic eukaryotic organism.

Along this description, it is considered that a polymeric film is a thin continuous material, typically with up to 200 $\mu$m thick.

Along this description, it is considered that fucus algae belong to the *phylum phaeophyta* and are composed of several species, such as *F. vesiculosus, F. spiralis* and *F. serratus.*

Along this description, it is considered that a material is biodegradable if the biodegradable degree is superior to 70% after the essay execution for a period of 45 days.

It is disclosed in this application a biodegradable polymeric composition comprising a polymer or copolymer selected from a list consisting of polyhydroxyalkanoate (PHA), polyhydroxybutyrate (PHB), polylactic acid (PLA), poly(L-lactide) (PLLA), and their combinations thereof and an additive selected from a photosynthetic eukaryotic organism. This composition is totally biologically degraded in less than six months, preferably in less than two months, more preferably less than one month and even more preferably in less than three weeks, maintaining the mechanical behaviour along the degradation period.

In an embodiment, the biodegradable polymeric composition comprises a polymer or copolymer selected from a list consisting of polyhydroxyalkanoate, polyhydroxybutyrate, polylactic acid, poly(L-lactide), and their combinations thereof and an additive selected from a photosynthetic eukaryotic organism or calcium carbonate or mixtures thereof.

In an embodiment, the additive of the biodegradable polymeric composition is selected from a list consisting of calcium carbonate, calcium oxide, calcium hydroxide, magnesium carbonate, magnesium oxide, magnesium hydroxide, photosynthetic eukaryotic organism, and their combinations thereof.

In an embodiment, the biodegradable polymeric composition is in a mass proportion from 85- 99 % (w/w) of polymer or copolymer and 1 - 15% (w/w) of additive.

In an embodiment, the biodegradable polymeric composition is in a mass proportion from 90- 98 % (w/w) of polymer or copolymer and 2 - 10% (w/w) of additive.

In an embodiment, the biodegradable polymeric composition is in a mass proportion from 92 -97 % (w/w) of polymer or copolymer and 3 - 8% (w/w) of additive.

In an embodiment, the biodegradable polymeric composition is in a mass proportion 97 % (w/w) of polymer or copolymer and 3% (w/w) of additive.

In an embodiment, the biodegradable polymeric composition is in a mass proportion 95 % (w/w) of polymer or copolymer and 5% (w/w) of additive.

In an embodiment, the additive of the biodegradable polymeric composition further comprises calcium carbonate.

In an embodiment, the biodegradable polymeric composition further comprises starch.

In an embodiment, the biodegradable polymeric composition is, in a mass proportion, from 85 - 98 % (w/w) of polymer or copolymer, 0.5 - 10% (w/w) of additive selected from a photosynthetic eukaryotic organism and 0.1- 3% (w/w) of starch.

In an embodiment, the biodegradable polymeric composition comprises, in a mass proportion, 90 - 95 % (w/w) of polymer or copolymer, 1 - 5% (w/w) of additive selected from a photosynthetic eukaryotic organism and 0.1- 3% (w/w) of starch.

In an embodiment, the biodegradable polymeric composition comprises, in a mass proportion, 92- 94 % (w/w) of polymer or copolymer, 1 - 3% (w/w) of additive selected from a photosynthetic eukaryotic organism and 0.5 - 1% (w/w) of starch.

In an embodiment, the photosynthetic eukaryotic organism used in the biodegradable polymeric composition is an algae, microalgae, a prokaryotic cyanobacteria, preferably an algae selected from a list consisting of: lithothamnium calcareum, fucus, or combinations thereof.

In an embodiment, the additive of the biodegradable polymeric composition comprises a particle size from 25 to 400 $\mu$m, preferably 35 to 350 $\mu$m, more preferably from 40 to 300 $\mu$m.

In an embodiment, the biodegradable polymeric composition further comprises a third additive selected from a list consisting of talc, silica, mica, pigment, flavor, ceramic spheres, carbon, metallized filler, carbon fiber, preservative, fungicide, sodium bicarbonate, halogenated compound, phosphorus compound, metallic oxide, inorganic filler, mica powder, epoxidized vegetable oil, butadiene, talc, chalk, clay, polyvinyl alcohol, titanium dioxide, zinc oxide, sodium dodecyl sulfate, polyethylene glycol, selenium, lead, tin, calcium-base stabilizer, amine, phosphite, polyimide, polyphenylene oxide, acrylonitrile-butadiene-styrene copolymer, acrylonitrile-styrene-acrylate copolymer, ethylene-vinyl acetate, polybutadiene, polyurethane, oil, grease, graphite, molybdenum disulfide, polytetrafluoroethylene, silicone-based materials, water, sodium benzoate, potassium benzoate, calcium silicate, wax, surfactant, quaternary ammonium compounds, polyglycol, fluorinated compounds, polyolefin and their combinations thereof.

In an embodiment, the glass transition temperature of the biodegradable polymeric composition is ranging from 45°C to 80°C, preferably from 55°C to 70°C, more preferably from 60°C to 65°C.

In an embodiment, the crystallization temperature of the biodegradable polymeric composition is ranging from 70°C to 100°C, preferably from 80°C to 90°C, more preferably from 85°C to 90°C.

In an embodiment, the melt temperature of the biodegradable polymeric composition is ranging from 140°C to 200°C, preferably from 150°C to 190°C, more preferably from 160°C to 180°C.

In an embodiment, the biodegradable polymeric composition comprises polylactic acid as polymer and lithothamnium calcareum as additive; or polylactic acid as polymer and fucus as additive; or polyhydroxyalkanoate as polymer and fucus as additive; or polyhydroxyalkanoate as polymer and lithothamnium calcareum as additive; or poly(L-lactide) as polymer and lithothamnium calcareum as additive; or poly(L-lactide) as polymer and fucus as additive.

An aspect of the disclosure comprises a biodegradable polymeric material comprising the above-mentioned composition wherein the tensile strength ranges from 5 to 60 MPa, preferably from 10 to 50 MPa, more preferably from 15 to 45 MPa, and the flexural strength from 30 to 70 MPa, preferably from 40 to 65 MPa, more preferably from 50 to 60 MPa.

In an embodiment, the biodegradable polymeric material is translucid.

In an embodiment, the biodegradable polymeric material is a pellet.

In an embodiment, the biodegradable polymeric material comprises an elongation at break ranging from 20 to 30%, preferably from 23 to 27%, more preferably 25%.

The present disclosure also relates to an article comprising the above-mentioned biodegradable polymeric composition.

In an embodiment, the article is opaque or semitransparent.

In an embodiment, the article has a tensile Young modulus ranging from 1000 to 2300 MPa, preferably from 1050 to 2500 MPa, more preferably from 1075 to 2250 MPa.

In an embodiment, the article has been formed through injection moulding, blow moulding, compression moulding, thermal forming, vacuum forming, extrusion moulding, calendaring or extrusion.

In an embodiment, the article comprises a coating, preferably a biodegradable coating.

In an embodiment, the coating of the article is selected from a list consisting of insect oils, waxes and their combinations thereof.

In an embodiment, the article comprises a biodegradable adhesive to attach a label.

In an embodiment, the biodegradable adhesive used in the article is selected from a list consisting of starch, soy, tree, polyesters, dextrin, animal-based, alginate, chitosan and their combinations thereof.

In an embodiment, the label of the article is a poly(L-lactide) label.

In an embodiment, the article comprises an end closure member sized and dimensioned to mate a restrictor portion sized and dimensioned to couple with an open end of the article.

In an embodiment, the wall thickness of the article ranges from 0.5 mm to 1.0 mm, preferably from 0.6 mm to 0.9 mm, more preferably from 0.7 mm to 0.8 mm.

In an embodiment, the article is a pre-form; a cutlery piece; a packaging piece, a capsule; an interior automotive part a consumer appliance part comprising the above-mentioned biodegradable polymer composition.

The present disclosure also describes a container for foodstuffs or beverages comprising the above-mentioned polymer composition; preferably wherein said container is a bottle.

The present disclosure also describes a sheet like article comprising any one of a combination of a film, a substantially flexible or rigid planar film, a film sleeve, a document wallet, a packaging film, a sheet comprising the above-mentioned biodegradable polymer composition.

The present disclosure also describes a method for manufacturing a mentioned biodegradable polymeric material comprising the steps of: dehumidification of the raw material; homogenization, for example in an extruder, with a temperature profile ranges from 95 to 185°C for 3 to 4h, a spindle speed ranges from 50 to 75 rpm, a feed metering speed ranges from 40 to 50 rpm and a degassing in the end zone of the spindle ranges from 50 to 100 kPa; wherein the raw material comprises the biodegradable polymeric composition described in any of the claims 1 to 7.

In an embodiment, the dehumidification temperature at the dehumidification step of the method for manufacturing a biodegradable polymeric material ranges from 50 to 100°C, preferably from 55 to 90°C, more preferably from 60 to 85°C.

In an embodiment, the temperature profile in the homogenization step of the method for manufacturing a biodegradable polymeric material ranges from 100 to 180°C, more preferably ranges from 100 to 175°C.

In an embodiment, the spindle speed in the homogenization step of the method for manufacturing a biodegradable polymeric material ranges from 53 to 73 rpm, preferably from 55 to 70 rpm.

In an embodiment, the feed metering speed in the homogenization step of the method for manufacturing a biodegradable polymeric material ranges from 42 to 48 rpm, preferably from 43 to 45 rpm.

In an embodiment, the degassing in the end zone of the spindle in the method for manufacturing a biodegradable polymeric material ranges from 55 to 90 kPa, more preferably from 60 to 85 kPa.

In an embodiment, the extruder used in the homogenization step of the method for manufacturing a biodegradable polymeric material is a twin-screw extruder or a double spindle extruder.

It is also disclosed that optionally just after the method for manufacturing the biodegradable polymeric material, the material is shaped into an article by injection moulding, compression moulding, blow moulding, thermal forming, film extrusion, cast film extrusion, film casting, vacuum forming, extrusion moulding or calendaring.

In an embodiment, the article in the method of manufacturing the biodegradable polymeric material is maintained at a temperature from 70°C to 100°C, preferably from 80°C to 90°C, more preferably from 83°C to 87°C.

In an embodiment, the article in the method of manufacturing the biodegradable polymeric material is maintained at a pressure from 2.0 MPa to 4.0 MPa, preferably from 2.5 MPa to 3.5 MPa, more preferably from 2.75 MPa to 3.25 MPa.

In an embodiment, the article used in the method of manufacturing the biodegradable polymeric material is blown by a fluid at a temperature from 10°C to 40°C, from 15°C to 30°C, more preferably from 20°C to 25°C.

## BRIEF DESCRIPTION OF THE DRAWINGS

The following figures provide preferred embodiments for illustrating the disclosure and should not be seen as limiting the scope of invention.

**Figure 1:** Scanning Electron Microscopy images obtained from a) Fucus and b) Lithothamnium calcareum.

**Figure 2:** Scanning Electron Microscopy images obtained from the samples of a) poly(L-lactide) and b) poly(L-lactide) + Fucus.

**Figure 3:** Graphic representation of the tension/deformation curve obtained from the realization of the traction tests on PHA, PLA, PET, Biocop and PHB samples.

**Figure 4:** Stress/strain curve obtained from the tensile tests on the samples whose formulations include the mixture of the polymers with the photosynthetic eukaryotic organism.

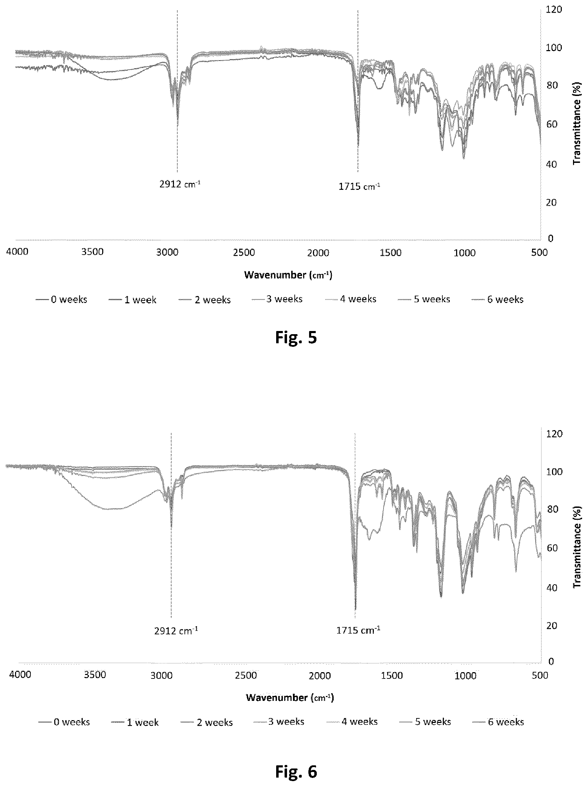

**Figure 5:** Graphic representation of the FTIR spectrum of the poly(L-lactide) sample.

**Figure 6:** Graphic representation of the FTIR spectrum of the poly(L-lactide) + Fucus sample.

**Figure 7:** Graphic representation of the FTIR spectrum of the polyethylene terephthalate sample.

**Figure 8:** Graphic representation of the carbonyl index for poly(L-lactide), poly(L-lactide) + Fucus and polyethylene terephthalate samples at all sampling times during the accelerated ageing test.

**Figure 9:** Schematic representation of the steps for the blow moulding for the obtention of a bottle.

**DETAILED DESCRIPTION**

This disclosure relates to a biodegradable polymeric composition, its production method and respective uses.

In an embodiment, the biodegradable polymeric composition that comprises a biodegradable polymer and at least one additive selected from a photosynthetic eukaryotic organism. In an embodiment, the photosynthetic eukaryotic organism used in this composition is lithothamnium calcareum, fucus, or their combinations thereof.

In an embodiment, the biodegradable polymeric composition in a mass proportion from 90% of biodegradable polymer and 10% of additive selected from a photosynthetic eukaryotic organism, preferably from 95% of biodegradable polymer and 5% of additive selected from a photosynthetic eukaryotic organism, even more preferably from 99% of biodegradable polymer and 1% of additive selected from a photosynthetic eukaryotic organism.

In an embodiment, for better results and a better industrial implementation, the additive of the biodegradable polymeric composition further comprises calcium carbonate.

In an embodiment, the biodegradable polymeric composition comprises a polymer or copolymer selected from a list consisting of polyhydroxyalkanoate, polyhydroxybutyrate, polylactic acid, poly(L-lactide), and their combinations thereof and an additive selected from a photosynthetic eukaryotic organism or calcium carbonate or mixtures thereof.

In an embodiment, for better results, the additive of the biodegradable polymeric composition is selected from a list consisting of calcium carbonate, calcium oxide, calcium hydroxide, magnesium carbonate, magnesium oxide, magnesium hydroxide, photosynthetic eukaryotic organism, and their combinations thereof.

In an embodiment, for better results, the biodegradable polymeric composition is in a mass proportion from 85 - 99 % (w/w) of polymer or copolymer and 1 - 15% (w/w) of additive. In another embodiment, for better results, the biodegradable polymeric composition is in a mass proportion from 90 - 98 % (w/w) of polymer or copolymer and 2 - 10% (w/w) of additive. In even another embodiment, for even better results, the biodegradable polymeric composition is in a mass proportion from 92 - 97 % (w/w) of polymer or copolymer and 3 - 8% (w/w) of additive.

In an embodiment, for better results, the biodegradable polymeric composition is in a mass proportion of 97 % (w/w) of polymer or copolymer and 3% (w/w) of additive. In another embodiment, for even better results, the biodegradable polymeric composition is in a mass proportion of 95 % (w/w) of polymer or copolymer and 5% (w/w) of additive.

In an embodiment, for better results, the biodegradable polymeric composition further comprises starch. With such element in an embodiment, for better results, the biodegradable polymeric composition is, in a mass proportion, from 85 - 98 % (w/w) of polymer or copolymer, 0.5 - 10% (w/w) of additive selected from a photosynthetic eukaryotic organism and 0.1 - 3% (w/w) of starch. In another embodiment, for even better results, the biodegradable polymeric composition comprises, in a mass proportion, 90 - 95 % (w/w) of polymer or copolymer, 1 - 5% (w/w) of additive selected from a photosynthetic eukaryotic organism and 0.1 - 3% (w/w) of starch. In a preferable embodiment, the biodegradable polymeric composition comprises, in a mass proportion, 92- 94 % (w/w) of polymer or copolymer, 1 - 3% (w/w) of additive selected from a photosynthetic eukaryotic organism and 0.5 - 1% (w/w) of starch.

In an embodiment, for better results and a more environmentally friendly solution, the photosynthetic eukaryotic organism used in the biodegradable polymeric composition is an algae, microalgae, a prokaryotic cyanobacteria, preferably an algae selected from a list consisting of: lithothamnium calcareum, fucus, or combinations thereof.

In an embodiment, for better mechanical resistance, the additive of the biodegradable polymeric composition comprises a particle size from 25 to 400 $\mu$m, preferably 35 to 350 $\mu$m, more preferably from 40 to 300 $\mu$m.

In an embodiment, for better physical and chemical results, the biodegradable polymeric composition further comprises a third additive selected from a list consisting of talc, silica, mica, pigment, flavor, ceramic spheres, carbon, metallized filler, carbon fiber, preservative, fungicide, sodium bicarbonate, halogenated compound, phosphorus compound, metallic oxide, inorganic filler, mica powder, epoxidized vegetable oil, butadiene, talc, chalk, clay, and their combinations thereof.

In an embodiment, with better chemical results, the glass transition temperature of the biodegradable polymeric composition is ranging from 45°C to 80°C, preferably from 55°C to 70°C, more preferably from 60°C to 65°C.

In an embodiment, with better chemical results, the crystallization temperature of the biodegradable polymeric composition is ranging from 70°C to 100°C, preferably from 80°C to 90°C, more preferably from 85°C to 90°C.

In an embodiment, with better chemical results, the melt temperature of the biodegradable polymeric composition is ranging from 140°C to 200°C, preferably from 150°C to 190°C, more preferably from 160°C to 180°C.

In an embodiment, for better results, the biodegradable polymeric composition comprises polylactic acid as polymer and lithothamnium calcareum as additive; or polylactic acid as polymer and fucus as additive; or polyhydroxyalkanoate as polymer and fucus as additive; or polyhydroxyalkanoate as polymer and lithothamnium calcareum as additive; or poly(L-lactide) as polymer and lithothamnium calcareum as additive; or poly(L-lactide) as polymer and fucus as additive.

The resulting biodegradable polymeric material from the composition previously mentioned has a tensile strength ranging from 5 to 60 MPa, preferably from 10 to 50 MPa, more preferably from 15 to 45 MPa, and the flexural strength from 30 to 70 MPa, preferably from 40 to 65 MPa, more preferably from 50 to 60 MPa, which are surprisingly good and stable mechanical behavior. For even better mechanical results, the biodegradable polymeric material comprises an elongation at break ranging from 20 to 30%, preferably from 23 to 27%, more preferably 25%.

In an embodiment, for some specific embodiments, the biodegradable polymeric material is translucid, and for other specific embodiments, the biodegradable polymeric material can be a pellet.

The present disclosure also relates to an article comprising the above-mentioned biodegradable polymeric composition. In a specific embodiment, the article is opaque or semitransparent to allow the person to clearly perceive the product inside the article.

In an embodiment for better mechanical behavior, the article has a tensile Young modulus ranging from 1000 to 2300 MPa, preferably from 1050 to 2500 MPa, more preferably from 1075 to 2250 MPa.

In an embodiment for better industrial application, the article has been formed through injection moulding, blow moulding, compression moulding, thermal forming, vacuum forming, extrusion moulding, calendaring or extrusion.

In an embodiment for better mechanical and visual results, the article comprises a coating, preferably a biodegradable coating. In an embodiment for a better result, the coating of the article is selected from a list consisting of insect oils, waxes and their combinations thereof.

In an embodiment for a better visual contrast, the article comprises a biodegradable adhesive to attach a label. In an embodiment for better results, the biodegradable adhesive used in the article is selected from a list consisting of starch, soy, tree, polyesters, dextrin, animal-based, alginate, chitosan and their combinations thereof and in an embodiment for even better results, the label of the article is a poly(L-lactide) label.

In an embodiment for better protection as food safety, the article comprises an end closure member sized and dimensioned to mate a restrictor portion sized and dimensioned to couple with an open end of the article.

In an embodiment for better mechanical behavior, the wall thickness of the article ranges from 0.5 mm to 1.0 mm, preferably from 0.6 mm to 0.9 mm, more preferably from 0.7 mm to 0.8 mm.

In an embodiment, the article is a pre-form; a cutlery piece; a packaging piece, a capsule; an interior automotive part a consumer appliance part comprising the above-mentioned biodegradable polymer composition.

In a preferable embodiment, it is also described a container for foodstuffs or beverages comprising the above-mentioned polymer composition; preferably wherein said container is a bottle. Another preferable embodiment is a sheet like article comprising any one of a combination of a film, a substantially flexible or rigid planar film, a film sleeve, a document wallet, a packaging film, a sheet comprising the above-mentioned biodegradable polymer composition.

The present disclosure also describes a method for manufacturing a mentioned biodegradable polymeric material comprising the steps of: dehumidification of the raw material; homogenization, for example in an extruder, with a temperature profile ranges from 95 to 185°C for 3 to 4h, a spindle speed ranges from 50 to 75 rpm, a feed metering speed ranges from 40 to 50 rpm and a degassing in the end zone of the spindle ranges from 50 to 100 kPa.

In an embodiment, for better results, the dehumidification temperature at the dehumidification step of the method for manufacturing a biodegradable polymeric material ranges from 50 to 100°C, preferably from 55 to 90°C, more preferably from 60 to 85°C. In an embodiment, for better results, the temperature profile in the homogenization step of the method for manufacturing a biodegradable polymeric material ranges from 100 to 180°C, more preferably ranges from 100 to 175°C.

In an embodiment, for better results, the spindle speed in the homogenization step of the method for manufacturing a biodegradable polymeric material ranges from 53 to 73 rpm, preferably from 55 to 70 rpm. In an embodiment for better results, the feed metering speed in the homogenization step of the method for manufacturing a biodegradable polymeric material ranges from 42 to 48 rpm, preferably from 43 to 45 rpm. In an embodiment for better results, the degassing in the end zone of the spindle in the method for manufacturing a biodegradable polymeric material ranges from 55 to 90 kPa, more preferably from 60 to 85 kPa.

In an embodiment for getting better results and a better mixture, the extruder used in the homogenization step of the method for manufacturing a biodegradable polymeric material is a twin-screw extruder or a double spindle extruder.

It is also disclosed that optionally just after the method for manufacturing the biodegradable polymeric material, the material is shaped into an article by injection moulding, compression moulding, blow moulding, thermal forming, film extrusion, cast film extrusion, film casting, vacuum forming, extrusion moulding or calendaring.

In an embodiment, for better results and guarantee of obtention of the wished form, the article used in the method of manufacturing the biodegradable polymeric material is maintained at a temperature from 70°C to 100°C, preferably from 80°C to 90°C, more preferably from 83°C to 87°C. In an embodiment, also for better results and guarantee of obtention of the wished form the article used in the method of manufacturing the biodegradable polymeric material is maintained at a pressure from 2.0 MPa to 4.0 MPa, preferably from 2.5 MPa to 3.5 MPa, more preferably from 2.75 MPa to 3.25 MPa.

In an embodiment for better results, the article used in the method of manufacturing the biodegradable polymeric material is blown by a fluid at a temperature from 10°C to 40°C, from 15°C to 30°C, more preferably from 20°C to 25°C.

In an embodiment, once the various polymeric bases and additives of the biodegradable polymeric composition to be applied in the design of the packaging are defined, tests were made for different combinations of polymer and algae to be tested, as well as the respective proportions of each of the component. For the definition of the raw materials, existing literature was used, with constant specifications and compatibility of equipment operation with the various raw materials defined. Each raw material was characterized from a chemical, mechanical and functional point of view, being that, for the execution of the various tests, the biodegradable polymeric composition was produced with the defined polymeric bases. The total set of samples can be observed in Table 1.

Table 1 -Tested formulations and their designation.

| Sample | Tested polymeric composition | Biodegradable* |
|---|---|---|
| A** | 97% Polylactic acid 4043D + 3% Lithothamnium Calcareum | Yes - more than 50% |
| B** | 97% Polylactic acid RXP + 3% Fucus | Yes - more than 50% |
| C** | 97% Polylactic acid 4043D + 3% Fucus | Yes - more than 50% |
| D** | 96% Polyhydroxyalkanoate + 4% Fucus | Yes - more than 70% |
| E** | 96% Polyhydroxyalkanoate + 4% Lithothamnium Calcareum | Yes - more than 70% |
| F** | 97% Polyhydroxyalkanoate 4043D + 3% Lithothamnium Calcareum + 0.01% blue pigment | Yes - more than 70% |
| G** | 96% poly(L-lactide) + 4% Lithothamnium Calcareum | Yes - more than 60% |
| H** | 96% poly(L-lactide) + 4% Fucus | Yes - more than 60% |
| *Biodegradable in less of 1 month; **Composition of the present disclosure | | |

In these tests, it was also decided to include the isolated study of the polymers, i.e. without the addition of additives, as comparative compositions in order to establish a control, observe and compare their influence on the final structure.

As previously mentioned, it is considered that a material is biodegradable if the biodegradable degree is superior to 70% after the essay execution for a period of 45 days. From the results presented below, it is clear that the compositions of the present disclosure accelerate the biodegradability of the material, reducing their impact on the environment when compared with the comparative compositions known from the prior art.

Scanning Electron Microscopy

Scanning Electron Microscopy (SEM) was carried out in order to study the morphology, distribution and typology of the various structures produced, taking into the above-mentioned combinations of polymer and photosynthetic eukaryotic organism. The typology of the base material used as additive was also studied.

Furthermore, the energy dispersive X-ray Spectrometry (EDS) technique was performed in order to verify the composition of the formulations produced by extrusion.

The microscope used was a Fei Nova 200 microscope coupled with an integrated system (EDS - Energy Dispersive Spectrometer), EDAX- Pegasus X4M. The samples were coated with gold.

In this type of microscopy, a high energy electron beam scans the gold-coated sample. The interaction results in different behaviours signals are collected, allowing the surface topography of the sample to be represented in three dimensions. With the EDS technique, it is possible to infer the abundance of the various elements.

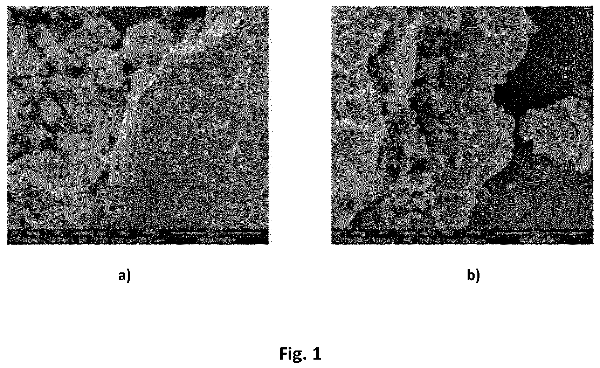

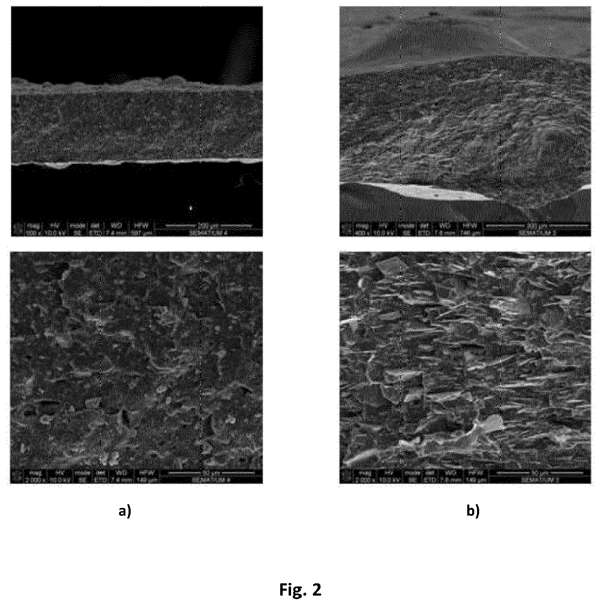

The SEM images of the photosynthetic eukaryotic organisms can be seen in Figure 1, where the image on the left, a), is Fucus and the one at right, b), is Lithothamnium calcareum. It can be seen that the morphology typology of the two photosynthetic eukaryotic organisms is quite similar. This similarity is perfectly logical as both photosynthetic eukaryotic organisms are in a powdered state. In both samples, it is observed an organisation into granules and separated from each other. We then proceeded to the SEM analysis of the poly(L-lactide) and poly(L-lactide) + Fucus formulations, and the results are shown in Figure 2.

From the observation of the images of Figure 2, it can be seen that the poly(L-lactide) sample has a more compact surface. On the other hand, the poly(L-lactide) + Fucus sample has a more branched structure. As the production process of the two samples was the same, it can be concluded that the differences are due to the presence of a photosynthetic eukaryotic organism. In general, it should be noted that the samples are intact and fairly uniform in both situations.

Mechanical characterization

The tensile mechanical properties of a material make it possible to characterise a material, taking into account the mechanical stress to which it may be subjected under certain conditions of use. By performing these tests, it is possible to obtain values such as maximum stress, elongation or Young's modulus.

In this type of tests, tests are applied to the material, under conditions of controlled and constant speed, until the rupture of the material is verified.

To carry out these tests, there have been considered the indications referred to in ASTM D638:2022 - Standard Test Method for Tensile Properties of Plastics. According to this standard, type 3 specimens were used, of rectangular geometric shape with the following dimensions: Length, $l \geq 250$ mm; Width, $b = 25$ mm; Thickness, $h \geq 2$ and $\leq 10$ mm.

The assembly of the experimental scheme consists of placing the specimens in bone form, in the vertical direction, tied at the extremities by two ties. In this sense, and in accordance with the standard, the grips shall be at a distance of about 150 mm, in the vertical direction. The tests were performed at a constant speed of 5 mm min-1.

From the different formulations presented in Table 1, and after its manipulation and production in the extruder, resulted in a set of samples consisting only of the polymers and by the combination of the polymers with the photosynthetic eukaryotic organism additives. Afterwards, the mechanical performance of the materials obtained was studied, according to the previous mentioned standard.

In this phase of the study, the formulations consisting of polymers only and those consisting of polymer and photosynthetic eukaryotic organism were considered, in order to study their mechanical performance and applicability/viability of application in different objects. In this way, it is intended to study the performance between the different samples at the level of mechanical properties, with consideration of parameters such as the maximum stress and maximum elongation reached during the execution of the traction tests, and to establish an extrapolation for the real intended application in order to make its use feasible. Besides, the aim is also to exclude any possible negative effect in terms of the mechanical performance of the photosynthetic eukaryotic organism on the final formulation.

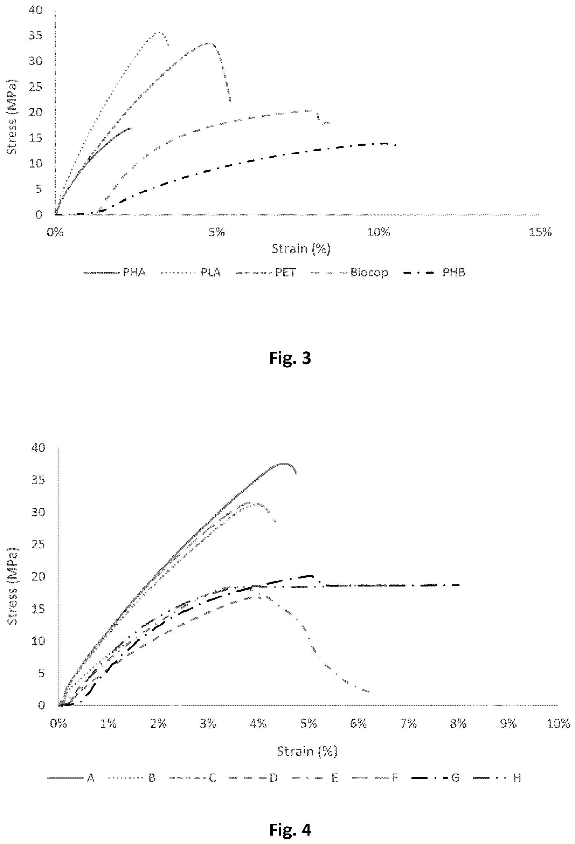

In Figure 3, it can be observed the behaviour of the samples under study when tensioned. From an initial observation of the stress/strain curves it is highlighted that both poly(L-lactide) and polyhydroxybutyrate obtained higher values of elongation and lower values of values of maximum stress reached when compared with the other samples. It can also be observed that in the case of polyhydroxyalkanoate, polylactic acid and polyethylene terephthalate, the curves have a more accentuated inclination at the beginning of the test, with higher stress values and lower values of elongation. This behaviour is associated with more rigid and crystalline polymers with oriented structures and stronger bonds. In the case of polyhydroxybutyrate and poly(L-lactide) a less accentuated inclination of the curve is observed in the initial instants of tests, with lower stress values and higher values of elongation. This behaviour is typical of more ductile and elastic materials, and elongation tends not to lead to rupture, or more time may be required until rupture occurs. These materials are more elastic and probably have a less oriented molecular structure.

For example, in a specific application of a water bottle, it is important to consider some strength, in order to make its application viable in the proposed objective.

Afterwards, it was proceeded the study of the performance of the formulations aiming the mixture of the polymers with a photosynthetic eukaryotic organism, Fucus or lithothamnium calcareum in terms of mechanical properties. For its execution, the scheme of formulations with the combination of the various polymers tested, polylactic acid, polyhydroxyalkanoate, polyhydroxybutyrate and poly(L-lactide), and the photosynthetic eukaryotic organisms, fucus and lithothamnium, represented in Table 1.

In Figure 4, it is illustrated the behaviour of the samples under study when tensioned, in this case for the formulations that include the polymer and a photosynthetic eukaryotic organism, such as lithothamnium calcareum and fucus. From the analysis of the stress/strain curves represented in Figure 4 it can be observed that the samples whose formulations include the polylactic acid polymer (A, B, C and F) present tendentially higher values of maximum stress and lower values of maximum elongation. The sample B stands out from the others, with stretching values also reduced, however, it has associated lower maximum stress values when compared with the remaining samples made of the polylactic acid polymer. Nevertheless, in general, it can be said that the behaviour of the samples made of polylactic acid are typical of stiffer polymers, with a higher degree of crystallinity, oriented structures and stronger bonds. These materials are easier to break. It is also worth noting the similarity between the results of Figure 4 and the results for the samples consisting of polymer alone, as in Figure 3. Regarding the samples made of polyhydroxyalkanoate (D and E), the maximum stress values achieved were lower than for the polylactic acid samples, with the maximum stress values on the polylactic acid samples, having also been obtained lower values of elongation.

In Table 1, the polymer polylactic acid was also highlighted. Polylactic acid is an aliphatic polyester thermoplastic and is synthesised from monomers of biological origin. It was found that in terms of mechanical and thermal properties it is very similar to polyethylene terephthalate and has a superior position compared to other biodegradable aliphatic polyesters, such as polybutylene succinate, polycaprolactone and even polyhydroxybutyrate. When subjected to high temperature and humidity, conditions called industrial composting, polylactic acid degrades rapidly and disintegrates within weeks or months, thus emphasising its biodegradable nature. Having said that, polylactic acid is also considered to be a biodegradable polymer composition with considerable potential tosupportthe development of a biodegradable packaging, so it is also to be included in the group of polymers to be tested.

Accelerated ageing tests

The ageing of materials due to ultraviolet (UV) radiation and harsh conditions, such as high periods of condensation or drought, is one of the main problems associated with products that are exposed to environmental conditions. Therefore, the test performed to simulate the ageing in the presence of sunlight and high condensation conditions is widely used to observe the effect of environmental conditions, either aesthetically or through the loss of mechanical/functional performance loss, on the materials. This test is performed according to ASTM G 53: 1996 - Standard Practice for Operating Light - and Water-Exposure Apparatus (Fluorescent UV-Condensation Type) for Exposure of Nonmetallic Materials, using the Xenotest Alpha + equipment.

For its execution, alternating cycles of exposure to UV light and condensation were done, namely 4h of UV light at 60°C and 4h of condensation at 50°C.

In this way, alternating cycles of UV light and condensation are promoted, and the test is prolonged until a change in the sample occurs, for example visual, mechanical or functional - specifically defined for each test, or after a defined period of time. According to the mentioned standardisation, the following periods of duration of the tests are recommended: 96 h; 168 h; 336 h; 504; 672 h; 1008 h; 1512 h; 2016 h.

The samples were taken weekly, i.e. after 168h of test execution and the test was extended for a time period of 10088 hours. The collected samples were analysed by DSC, FTIR, reflectance spectrophotometer and tensile tests.

The samples subjected to accelerated ageing were: 100% (w/w) of poly(L-lactide), 96% (w/w) of poly(L-lactide) + 4% (w/w) of Fucus and polyethylene terephthalate. The only difference between the first two mentioned samples is the incorporation of photosynthetic eukaryotic organism, as such, with the comparative study between them it will be possible to infer the influence of the presence of photosynthetic eukaryotic organism in the ageing process of the sample. A sample of polyethylene terephthalate was also tested, given its greater resistance to adverse conditions, thus being able to establish a comparative process.

With regard to the poly(L-lactide) + Fucus sample, it has been observed a significant degradation of the material with the execution of the test, which is more notorious as longer is the period of execution of the test. Besides, visually, it was also possible to observe a great loss of colour of the samples, also intensifying the longer the period of execution of the test.

On the other hand, the polyethylene terephthalate samples remained intact during the accelerated ageing test and no breakage was observed in any of the samples.

This result highlights the degradability of poly(L-lactide) sample given the very different consequences in comparison with the polyethylene terephthalate samples with the periods of exposure to condensation and UV light.

With accelerated ageing occurs the formation of degradation products, namely carbonyl groups, since their presence is a direct indication of the breaks that occur in the polymer chain. Having said this, FTIR analysis of the various samples were obtained from the accelerated ageing test with subsequent calculation of the carbonyl index (CI). The carbonyl index is calculated on basis of the Eq. 1:

$$CI = \frac{I_{1715}}{I_{2912}} \quad \text{(Eq.1)}$$

Wherein $I_{1715}$ is the FTIR peak intensity at 1715 cm$^{-1}$, related with the vibration of the carbonyl group C=O and $I_{2912}$ is the FTIR peak intensity at 2912 cm$^{-1}$, related with the group ($-CH_2-$), which is very stable along the accelerated ageing.

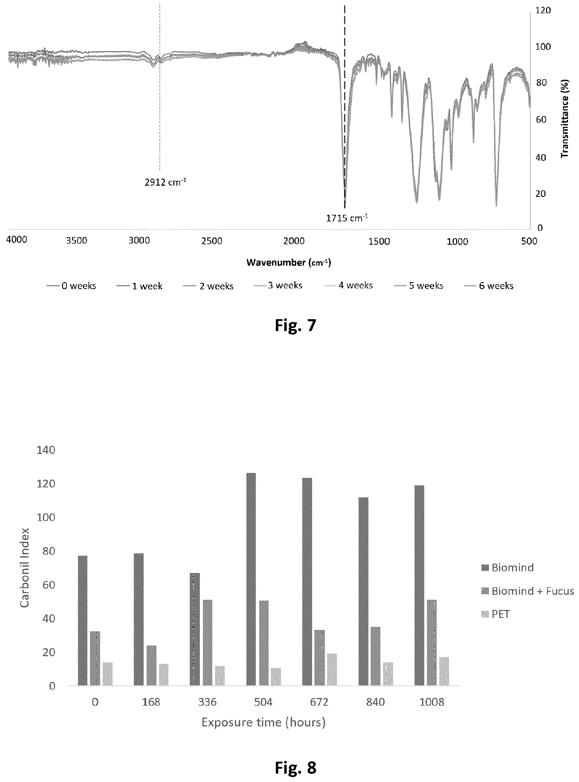

After obtaining the various FTIR graphs, the calculation of the IC for all the samples under study was done. The results obtained are shown in Figure 8.

From the analysis of the graph in the Figure 8, it can be seen that the sample with the highest IC is poly(L-lactide), followed by poly(L-lactide) + Fucus and finally polyethylene terephthalate. In the samples poly(L-lactide) and poly(L-lactide) + Fucus there is a greater increase of IC during the accelerated aging test, and with the IC, between 0 and 504 hours, is observed almost a doubling of the value. This result confirms the occurrence of the degradation process with the exposure to periods of condensation and UV light, since there is the formation of carbonyl groups, which are one of the products originated from the breaking of the polymer chains. In the case of the polyethylene terephthalate sample, there is a slight change in the IC value, with IC value at 0 hours is 14 and at 1008 hours is 17. This difference is very small, not considered significant, and is due to the non-biodegradable nature of polyethylene terephthalate, this being one of the reasons why its presence in the environment is very polluting and harmful - remaining in the intact form of the polymer chains polymer chains for a long period.

Poly(L-lactide) is also considered a good option since it is a biodegradable polymer used in some products, which when in domestic conditions is biodegraded into humus.

The purpose of adding additives is to enrich the biodegradable polymeric composition, and therefore the final product, with new functionalities, without, however, significantly altering the structure and properties of the base material. When formulating the biodegradable polymeric composition, the incorporation of additives is essential to consider three factors: stability, purity and toxicity. In order to ensure that these points are not compromised, especially when it comes to additives in food packaging, since there is a high number of regulations that must be followed and complied with.

The added additives can perform a number of functions, including: the improvement of the performance of the production process by reducing internal friction (lubricants); alter polymer morphology (nucleation agents); aid in the foaming (blowing agents); suppression of thermal decomposition during processing (antioxidants); improving aesthetics (blowing agents or optical brighteners); improving the functionalities of the end product (flame retardants agents, anti-static agents, UV light stabilizers).

Table 2 - Additives types and their technical effect

| Additive | Examples | Technical effect |
|---|---|---|
| Antiblock | Talc, silica, clay, mica, ceramic sphere | Preventing that the polymer sticks to itself and make separation easier. |
| Antifog | Polyvinyl alcohol, silica, titanium dioxide, zinc oxide, sodium dodecyl sulfate, polyethylene glycol | Prevent the formulation of fog (water vapour) on the plastic surface. |
| Antioxidant | Selenium | Prevent oxidisation. |
| Antistatic agent | Carbon, metallised filler, carbon fiber | Reduce build-up of static. |
| Biocide | Preservative, fungicide | Control any harmful organism. |
| Chemical blowing agent | Sodium bicarbonate | Produce gases on polymerisation to produce foam |
| Flame retardant | Halogenated compound, phosphorous compound, metallic oxide, inorganic filler | Reduce flammability |
| Heat stabilizer | Lead, tin, calcium-bases stabilizer, amines, phosphites, polyimides, polyphenylene oxide | Maintain colour quality at high forming temperature |
| Impact modifier | Acrylonitrile-butadiene-styrene copolymer, Acrylonitrile-styrene-acrylate copolymer, Ethylene-vinyl acetate, Polybutadiene, Polyurethane | Improve ability to absorb and dissipate impact forces |
| Light stabilizer | Mica powder | Reduce degradation from UV light |
| Lubricant | oil, grease, graphite, molybdenum disulfide, polytetrafluoroethylene, | Help the molecules to flow during forming |
| Mould release agent | Silicone-based materials, polytetrafluoroethylene, wax, oil, water | Prevent material from sticking to moulds |
| Nucleating agent | Sodium benzoate, potassium benzoate, calcium silicate, talc, clay | Improve hardness, elasticity, optical properties and transparency |
| Plasticiser | Epoxidized vegetable oil, butadiene | Make material soft and pliable |

(continued)

| Additive | Examples | Technical effect |
|---|---|---|
| Processing aid | Oil, grease, wax, surfactant, quaternary ammonium compounds, polyglycol | Improve the production rates at manufacture by removing the "sharkskin" or "orange peel" effect produced by molten polymer sticking to the die |
| Slip agent | Polytetrafluoroethylene, Fluorinated compounds, Polyolefins, silicone, wax | Reduce the coefficient of friction, thus helping the molecules to flow |
| Filler | Talc, chalk, clay | Improves stiffness, strength and electrical properties (clay) |

Furthermore, to these additives, the present disclosure describes a biodegradable polymeric composition that comprises an additive selected from a photosynthetic eukaryotic organism, or that further comprises calcium carbonate. This additive is essential to get the biodegradable aspect, especially in a marine environment by incorporating nutritional components into the packaging, so that they can serve as a food and nutritional source for the various beings of the marine environment, such as fish, algae and micro-organism. It is important to highlight that in the development of the biodegradable polymeric composition, it is always considered the human health and well-being, since the biodegradable polymeric composition before being destined to the marine environment is used for other disposable products for human consumption, such as food packaging. It is also important to highlight the guarantee that this natural reinforcement in the polymer matrix does not compromise the organoleptic and nutritional qualities of the food that is intended to store. That said, the photosynthetic eukaryotic organisms are currently applied in human food, not toxic to humans, so they are a good starting point to develop the formulation.

In an embodiment, the lithothamnium calcareum is a photosynthetic eukaryotic organism very rich in calcium, magnesium, since it is composed for the most part of calcium carbonate and magnesium carbonate, and is therefore widely used as a food supplement for human beings and as a nutritional source for animals. In addition to the mentioned elements, it is also composed by more than twenty trace elements, in variable quantities, such as iron, manganese, boron, nickel, copper, zinc, molybdenum, selenium and strontium.

In an embodiment, the fucus is a photosynthetic eukaryotic organism very rich in macro and micronutrients - high in dietary fibre, minerals and vitamins and low-fat content and is therefore used in some coastal countries of western Europe. Fucus also has associated high values of fuicodan, chlorotannins and fucoxanthin and, in turn, these components have also been extensively explored in the therapeutic aspect, namely, in the treatment of cellulitis, blood clot formation, rheumatoid arthritis asthma, arteriosclerosis, diabetes, psoriasis and other skin conditions, cancer and other conditions related to oxidative and inflammatory character. All these concepts have broadened the application of this photosynthetic eukaryotic organism in the pharmaceutical, cosmetic, food and nutritional sector.

Studies have quantified the nutritional value of Fucus based on its dry weight, concluded that 9.7% (w/w) of its composition corresponds to proteins, 5.2% (w/w) to lipids, 17.6% (w/w) carbohydrates, 63.9% (w/w) fibre and a very rich mineral composition.

In an embodiment, the biodegradable polymer composition can be used in an article, being said article a polymer film, a pellet, a capsule, a disc, a microparticle or even a 3D printed structure obtained by additive manufacturing.

In any of the described embodiments, the biodegradable polymeric composition is non-toxic for humans.

In an embodiment of the article obtained with the previously mentioned biodegradable polymeric composition, there is a coating, preferably a biodegradable coating, wherein said coating is selected from a list consisting of soil biodegradable material including vegetable, animal, insect oils, waxes and their combinations thereof.

In an embodiment, for the production of the biodegradable polymer film, different manufacturing methods can be applied, such as film extrusion using a flat die and subsequent cooling and wounding up on a roll, cast film extrusion which is an extrusion method in which the polymer melt is cooled or quenched and then wound up on a roll, blown film extrusion using a special extrusion die to extrude a tube, wherein said melted tube is then inflated to the required circumference and subsequently cooled down and collapsed between two steel rolls as two sheets, coextrusion producing films composed of at least two different polymeric layers, calendering, in which a polymeric melt is shaped between two steel rolls, skiving, which is a peeling of the film or sheet from a solid roll (billet) in a similar fashion as a wood veneer, film casting which is a deposition of a polymer solution or aqueous dispersion on a carrier or another substrate or a extrusion coating similar to film casting, but in this method the melt is deposited on the carrier or another substrate.

In an embodiment, besides all the different materials it can be made from, a polymeric film can be clear, colored, smooth, rough, functionally embossed, opaque, or semitransparent. Finished films can be either laminated by several methods, or stretched (oriented) in machine direction, or cross-machine direction or biaxially. Stretched films are often annealed when desired. Other common treatments of finished polymeric films are surface treatment.

In an embodiment, for the production of the final product, such as a food packaging, moulding was one of the options developed, especially with blow moulding. Blow moulding is an industrially applicable process that allows large scale production of hollow packages, such as bottles. The method comprises the promoting of the expansion of a preform of heated plastic material by imposing a flow of compressed air. By the action of the airflow, the material contacts the mould, which is at lower temperatures and as such promotes the hardening of the material, with acquisition of the mould shape. This moulding can be carried out in different ways: either by stretching and extrusion.

In an embodiment, the blow moulding could also serve for the preparation of a preform, for example in the preparation of a bottle. In this case, the preforms are made up of the neck, which already has the final shape and size to be presented in the bottle and are produced by injection. The preforms have a cylindrical shape which, when blown, will acquire the shape of the mould applied. During the stretching process the preform is subject to a conformational change due to the imposition of the blow. This process occurs in several stages, being these schematically represented in Figure 3.

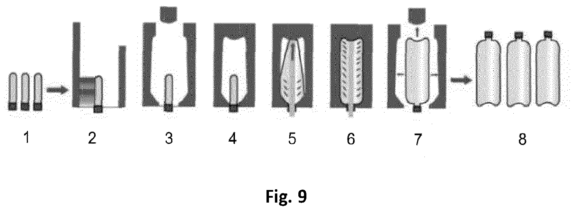

In an embodiment, as illustrated in Figure 9, the blow moulding process comprise the steps of: reception and heating of the preforms to a predefined temperature (1); the preforms acquire a "malleable" typology (2); passage of the preform into the mould with mould insulation (3 and 4); start of the stretching process - pin comes into contact with the preform and stretches it through an axial movement (5); supply of compressed air into the preform, whose pressure can be established between 1.8 MPa and 4.0 MPa, by means of a blow (6); opening of the mould (7); bottle exit from the equipment (8).

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above-described embodiments are combinable.

The following claims further set out particular embodiments of the disclosure.

**References**

[1] D. Nabi Saheb and J. P. Jog, "Natural fiber polymer composites: A review," Adv. Polym. Technol., vol. 18, no. 4, pp. 351-363, 1999.

[2] R. L. Pascini, "Compósites poliméricos," 2010.

[3] V. Siracusa, P. Rocculi, S. Romani, and M. D. Rosa, "Biodegradable polymers for food packaging: a review," Trends Food Sci. Technol., vol. 19, no. 12, pp. 634- 643, 2008.

[4] R. Scaffaro, A. Maio, F. Sutera, E. ortunato Gulino, and M. Morreale, "Degradation and recycling of films based on biodegradable polymers: A short review," Polymers (Basel)., vol. 11, no. 651, pp. 1-20, 2019

[5] Carlaile Fernanda De Oliveira Nogueira, "Estudo de polímeros biodegradáveis e compostáveis de fontes renováveis como alternativa aos polímeros tradicionais," 2013.

**Claims**

1. A biodegradable polymeric composition comprising

   a polymer or copolymer selected from a list consisting of polyhydroxyalkanoate, polyhydroxybutyrate, polylactic acid, poly(L-lactide), and their combinations thereof;
   and an additive selected from a photosynthetic eukaryotic organism.

2. The biodegradable polymeric composition according to the previous claim, wherein the said composition is in the following mass proportion:

   from 85 - 99 % (w/w) of polymer or copolymer and 1 - 15% (w/w) of additive; preferably

or from 90 - 98 % (w/w) of polymer or copolymer and 2 - 10% (w/w) of additive; more preferably or from 92 - 97 % (w/w) of polymer or copolymer and 3 - 8% (w/w) of additive.

3. The biodegradable polymeric composition according to any of the previous claims, wherein the photosynthetic eukaryotic organism is an algae, microalgae, a prokaryotic cyanobacteria, preferably an algae selected from a list consisting of: lithothamnium calcareum, fucus, or combinations thereof.

4. The biodegradable polymeric composition according to any of the previous claims, wherein the additive further comprises calcium carbonate.

5. The biodegradable polymeric composition according to any of the previous claims, wherein the additive comprises a particle size from 25 to 400 μm, preferably 35 to 350 μm, more preferably from 40 to 300 μm.

6. The biodegradable polymeric composition according to any of the previous claims, further comprising a third additive selected from a list consisting of talc, silica, mica, pigment, flavor, ceramic spheres, carbon, metallized filler, carbon fiber, preservative, fungicide, sodium bicarbonate, halogenated compound, phosphorus compound, metallic oxide, inorganic filler, mica powder, epoxidized vegetable oil, butadiene, talc, chalk, clay, polyvinyl alcohol, titanium dioxide, zinc oxide, sodium dodecyl sulfate, polyethylene glycol, selenium, lead, tin, calcium-base stabilizer, amine, phosphite, polyimide, polyphenylene oxide, acrylonitrile-butadiene-styrene copolymer, acrylonitrile-styrene-acrylate copolymer, ethylene-vinyl acetate, polybutadiene, polyurethane, oil, grease, graphite, molybdenum disulfide, polytetrafluoroethylene, silicone-based materials, water, sodium benzoate, potassium benzoate, calcium silicate, wax, surfactant, quaternary ammonium compounds, polyglycol, fluorinated compounds, polyolefin and their combinations thereof.

7. The biodegradable polymeric composition according to any of the previous claims, comprising

polylactic acid as polymer and lithothamnium calcareum as additive; or
polylactic acid as polymer and fucus as additive; or
polyhydroxyalkanoate as polymer and fucus as additive; or
polyhydroxyalkanoate as polymer and lithothamnium calcareum as additive; or
poly(L-lactide) as polymer and lithothamnium calcareum as additive; or
poly(L-lactide) as polymer and fucus as additive.

8. A biodegradable polymeric material comprising the composition of claims 1-7 wherein the tensile strength ranges from 5 to 60 MPa, preferably from 10 to 50 MPa, more preferably from 15 to 45 MPa, and the flexural strength from 30 to 70 MPa, preferably from 40 to 65 MPa, more preferably from 50 to 60 MPa.

9. The biodegradable polymeric material according to the previous claim, wherein the elongation at break ranges from 20 to 30%, preferably from 23 to 27%, more preferably 25%.

10. An article comprising the biodegradable polymeric composition described in any of the previous claims 1 to 7; preferably wherein the article is a pellet; a pre-form; a cutlery piece; a packaging piece, a capsule; an interior automotive part; a consumer appliance part.

11. The article according to the previous claim, wherein the said article has a tensile Young modulus ranging from 1000 to 2300 MPa, preferably from 1050 to 2500 MPa, more preferably from 1075 to 2250 MPa.

12. The article according to any of the previous claims 10 to 11, comprising a coating, preferably a biodegradable coating, more preferably a coating selected from a list consisting of insect oils, waxes and their combinations thereof.

13. A container for foodstuffs or beverages comprising the biodegradable polymer composition described in any of the previous claims 1 to 7; preferably wherein said container is a bottle.

14. A method for manufacturing a biodegradable polymeric material described in any of the claims 8 to 9 comprising the following steps:

- dehumidification of the raw material; preferably wherein the dehumidification temperature at the dehumidification step ranges from 50 to 100°C; wherein the raw material comprises the biodegradable polymeric composition described in any of the claims 1 to 7;

- mixing the dehumidified raw material obtained in the previous step;
- homogenization of the previous mixture with a temperature profile ranges from 95 to 185°C for 3 to 4h, a spindle speed ranges from 50 to 75 rpm, a feed metering speed ranges from 40 to 50 rpm and a degassing in the end zone of the spindle ranges from 50 to 100 kPa;
- Optionally, the biodegradable polymeric material is then shaped into an article through injection moulding, blow moulding, compression moulding, thermal forming, vacuum forming, extrusion moulding, calendaring or extrusion.

15. The method of manufacturing the biodegradable polymeric material according to the previous claim, wherein the article is maintained at a temperature from 70°C to 100°C, preferably from 80°C to 90°C, more preferably from 83°C to 87°C and/or; wherein the article is maintained at a pressure from 2.0 MPa to 4.0 MPa, preferably from 2.5 MPa to 3.5 MPa, more preferably from 2.75 MPa to 3.25 MPa and/or; wherein the article is blown by a fluid at a temperature from 10°C to 40°C, from 15°C to 30°C, more preferably from 20°C to 25°.

a)

b)

**Fig. 1**

a)                                              b)

**Fig. 2**

**Fig. 3**

**Fig. 4**

Fig. 5

Fig. 6

**Fig. 7**

**Fig. 8**

**Fig. 9**

Europäisches
Patentamt

European
Patent Office

Office européen
des brevets

# EUROPEAN SEARCH REPORT

**Application Number**

EP 23 17 0680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/175842 A1 (PTT GLOBAL CHEMICAL PUBLIC CO LTD [TH] ET AL.) 30 October 2014 (2014-10-30) | 1-6, 8-10,13 | INV. C08G63/08 C08K3/26 C08K11/00 |
| A | * claims 9,10,13 * * table 1 * | 7 | |
| X | ROY CHONG JUN WEI ET AL: "Microalgae-based bioplastics: Future solution towards mitigation of plastic wastes", ENVIRONMENTAL RESEARCH, ACADEMIC PRESS, SAN DIEGO, CA, US, vol. 206, 27 December 2021 (2021-12-27), XP086938805, ISSN: 0013-9351, DOI: 10.1016/J.ENVRES.2021.112620 [retrieved on 2021-12-27] | 1-6,8-13 | |
| A | * tables 3,4 * * paragraph [2.1.3] * | 7 | |
| X | US 9 828 490 B2 (PTT GLOBAL CHEMICAL PUBLIC CO LTD [TH]) 28 November 2017 (2017-11-28) | 1-6,8-13 | TECHNICAL FIELDS SEARCHED (IPC) |
| A | * figures 2,7,8,13 * * tables 2, 3 * | 7 | C08G C08L C08K |

The present search report has been drawn up for all claims

| Place of search | Date of completion of the search | Examiner |
|---|---|---|
| The Hague | 31 August 2023 | Mensah, Laure |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 17 0680

This annex lists the patent family members relating to the patent documents cited in  the above-mentioned European search report.
The members are as contained in the European Patent Office EDP file on
The European Patent Office is in no way liable for these particulars which are merely given for the purpose of information.

31-08-2023

| Patent document cited in search report | | Publication date | Patent family member(s) | | Publication date |
|---|---|---|---|---|---|
| WO 2014175842 | A1 | 30-10-2014 | KR 20150048791 | A | 07-05-2015 |
| | | | WO 2014175842 | A1 | 30-10-2014 |
| US 9828490 | B2 | 28-11-2017 | CA 2882406 | A1 | 06-03-2014 |
| | | | CN 104870560 | A | 26-08-2015 |
| | | | EP 2890740 | A1 | 08-07-2015 |
| | | | HK 1211972 | A1 | 03-06-2016 |
| | | | JP 6306589 | B2 | 04-04-2018 |
| | | | JP 2015531411 | A | 02-11-2015 |
| | | | MY 173434 | A | 24-01-2020 |
| | | | US 2015225539 | A1 | 13-08-2015 |
| | | | WO 2014035351 | A1 | 06-03-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. NABI SAHEB ; J. P. JOG.** Natural fiber polymer composites: A review. *Adv. Polym. Technol.,* 1999, vol. 18 (4), 351-363
- **R. L. PASCINI.** *Compósites poliméricos,* 2010
- **V. SIRACUSA ; P. ROCCULI ; S. ROMANI ; M. D. ROSA.** Biodegradable polymers for food packaging: a review. *Trends Food Sci. Technol.,* 2008, vol. 19 (12), 634-643

- **R. SCAFFARO ; A. MAIO ; F. SUTERA ; E. ORTUNATO GULINO ; M. MORREALE.** Degradation and recycling of films based on biodegradable polymers: A short review. *Polymers (Basel).,* 2019, vol. 11 (651), 1-20
- **CARLAILE FERNANDA DE OLIVEIRA NOGUEIRA.** *Estudo de polímeros biodegradáveis e compostáveis de fontes renováveis como alternativa aos polímeros tradicionais,* 2013